# FASCICULE DE BREVET EUROPEEN

(11) **EP 2 706 781 B1**
(45) Date de publication et mention de la délivrance du brevet: **25.10.2017**
(21) Numéro de dépôt: 13182409.6
(22) Date de dépôt: 30.08.2013
(51) Int. Cl.: H04W 28/22

(54) **PROCÉDÉ DE TRANSMISSION DANS UN RÉSEAU AD HOC MULTISAUTS IP**
Übertragungsverfahren in ein Ad-Hoc-IP-Netz für die Multisprung-Peer-zu-Peer-Kommunikation
Transmission method in a multi-hop ad hoc IP network

(30) Priorité: 05.09.2012 FR 1202372
(43) Date de publication de la demande: 12.03.2014
(73) Titulaire: Thales, 92200 Neuilly Sur Seine (FR)
(72) Inventeur: Leguay, Jérémie, 92622 Gennevilliers Cedex (FR); Marques, Helder, 92622 Gennevilliers Cedex (FR); Lavaux, Damien, 92622 Gennevilliers Cedex (FR); Khalife, Hicham, 92622 Gennevilliers Cedex (FR); Conan, Vania, 92622 Gennenvilliers Cedex (FR)
(74) Mandataire: Lavoix

(56) Documents cités:
- WO-A1-2009/071688
- HONGQIANG ZHAI ET AL: "Alleviating intra-flow and inter-flow contentions for reliable service in mobile ad hoc networks", MILITARY COMMUNICATIONS CONFERENCE, 2004. MILCOM 2004. 2004 IEEE MONTEREY, CA, USA 31 OCT. - 3 NOV. 2004, PISCATAWAY, NJ, USA,IEEE, vol. 3, 31 octobre 2004 (2004-10-31), pages 1640-1646, XP010826007, DOI: 10.1109/MILCOM.2004.1495184 ISBN: 978-0-7803-8847-5
- YAO-NAN LIEN ET AL: "Hop-by-Hop TCP over MANET", PROCEEDINGS / 2008 IEEE ASIA-PACIFIC SERVICES COMPUTING CONFERENCE, APSCC 2008 : 9 - 12 DECEMBER 2008, YILAN, TAIWAN, IEEE, PISCATAWAY, NJ, USA, 9 décembre 2008 (2008-12-09), pages 1150-1155, XP031423497, ISBN: 978-0-7695-3473-2
- LEGUAY J ET AL: "Non Disruptive Data Services Towards Real-Time Traffic in Wireless Ad Hoc Networks", COMMUNICATIONS, 2009. ICC '09. IEEE INTERNATIONAL CONFERENCE ON, IEEE, PISCATAWAY, NJ, USA, 14 juin 2009 (2009-06-14), pages 1-5, XP031506197, ISBN: 978-1-4244-3435-0

## Description

La présente invention concerne un procédé de transmission d'informations dans un réseau ad hoc multisauts comportant, la transmission d'un message d'un noeud émetteur source à un noeud destinataire final au travers d'une succession de sauts d'un noeud émetteur à un noeud récepteur immédiatement suivant, dans lequel est mis en oeuvre :
a) un mécanisme de la gestion de la fiabilité comportant :
   - lors de la ou chaque réception conforme sur chaque saut, d'au moins un message par le noeud récepteur, l'envoi d'un message d'acquittement vers le seul noeud émetteur,
   - l'application d'une loi de retransmission du message sur le saut, du noeud émetteur vers le noeud récepteur, laquelle loi comporte des règles de non retransmission de messages, conduisant à la non retransmission du message,
b) un mécanisme de gestion des congestions des noeuds prévoyant une limitation du débit d'envoi d'un noeud émetteur vers un noeud récepteur suite à une information de congestion du noeud récepteur adressée au noeud émetteur.

Les réseaux ad hoc multisauts sont utilisés notamment dans les réseaux radios, et en particulier les réseaux militaires dans lesquels la communication n'est en générale possible qu'entre les noeuds en portée radio. Un protocole de routage assure alors le relayage des messages ou paquets de noeud en noeud pour permettre la connectivité de bout en bout.

Les noeuds dans le réseau peuvent être mobiles ou non.

Ces réseaux sont des réseaux ad hoc, en ce sens que le réseau ne comporte pas d'infrastructure définie préalablement. Ils sont souvent désignés par MANET.

En raison de la mobilité des noeuds et des problèmes de propagation radio, la connectivité varie considérablement dans le temps et l'espace compliquant le transport des données, notamment du fait du manque de fiabilité de la transmission sur chacun des sauts radio entre un noeud émetteur et un noeud récepteur suivant et de l'éventuelle congestion de certains noeuds devant transmettre plus de messages qu'il n'en soient capables.

Dans ce contexte, les solutions de transport développées pour les réseaux utilisant Protocole IP (Internet Protocol), par exemple le protocole de transport TCP, ne sont pas satisfaisantes pour les raisons qui suivent.

Le noeud source et le noeud destination se coordonnent pour réguler la vitesse d'envoi des données et décider des retransmissions. Les réseaux ad hoc nécessitent cependant de bien contrôler le débit des flux sur chaque saut radio et d'éviter de retransmettre systématiquement les paquets perdus depuis le noeud source.

Les protocoles de transport, développés pour les réseaux IP, ont été conçus pour des réseaux à faible taux de perte, faible délai et faible gigue. Ces protocoles ne réagissent donc pas de manière adaptée dans les réseaux ad hoc. Par exemple, lorsqu'une perte de paquets survient, TCP réduit son débit pensant qu'il s'agit d'une congestion alors que ce n'est pas systématiquement nécessaire.

Les réseaux radios ad hoc actuels offrent un support d'IP basique. Ils sont capables de router des paquets entre un noeud source et un noeud destination mais ne fournissent pas de service IP optimisé de bout en bout dans le réseau ad hoc. Si l'application utilise le protocole de transport TCP sur ce réseau, le contrôle de flux est effectué « au mieux », c'est-à-dire sans support des noeuds radios, ce qui pose des problèmes de performance, et notamment un engorgement des noeuds intermédiaires, et des retransmissions de bout en bout.

Des solutions ont été avancées pour permettre de conserver le Protocol IP sur des réseaux ayant des caractéristiques spécifiques. On peut citer par exemple les solutions qui suivent, classées par couche selon le modèle OSI.

### Couche 4.

Les Performance Enhanced Proxies (PEP) (http://www.faqs.org/rfcs/rfc3135.html) ou Split TCP permettent d'améliorer les performances de TCP lorsqu'une connexion traverse un lien ayant des taux d'erreur élevés ou ayant peu de ressources (bande passante faible, délai élevé). Les PEPs interceptent les flux (e.g., session TCP) pour optimiser le transport des données sur un segment de réseau difficile. Deux PEPs situés en bordure de segment (satellite par exemple) peuvent utiliser un protocole spécifique entre eux. De nombreuses techniques sont utilisées dans les PEPs, comme par exemple la retransmission locale de segments TCP (H. Balakrishnan, S. Seshan, and R. Katz. Improving Reliable Transport and Handoff Performance in Cellular Wireless Networks. ACM Wireless Networks, Vol. 1, 1995) perdus. Ce mécanisme permet de récupérer rapidement les données sans affecter le débit de la source. Les PEPs sont généralement utilisés pour optimiser le transport sur un segment de mauvaise qualité et non plusieurs. Cette solution a cependant été mise en oeuvre dans un réseau ad hoc (Split TCP for mobile ad hoc networks. Kopparty, S.; Krishnamurthy, S.V.; Faloutsos, M.; Tripathi, S.K.; GlobeCom 2002) en décomposant les connexions de bout en bout en plusieurs segments locaux. Les proxy stockent alors les paquets et les livrent au prochain proxy.

Cette solution se situe au niveau transport (couche 4) en interceptant les connexions TCP de bout en bout. Elle ne fonctionne donc pas de manière transparente vis-à-vis du protocole de transport. Par ailleurs le mécanisme saut par saut ajuste le débit de sortie proportionnellement au débit des acquittements reçus. Il ne permet pas de réagir de manière préventive à une congestion et peut transmettre inutilement des messages alors que le noeud suivant n'a pas la capacité de les recevoir.

### Couche 4.

De nombreuses adaptations de TCP pour les réseaux ad hoc ont été proposées, comme A-TCP (J. Liu, S. Singh. ATCP: TCP for Mobile Ad Hoc Networks. IEEE Journal on Selected Areas in Communications. 1999) ou TCP-ELF (G. Holland and N. Vaidya, "Analysis of TCP performance over mobile ad hoc networks," Proc. ACM Mobicom'99, Seattle, WA, 1999). Ces solutions ajoutent un module qui surveille l'état du réseau (basé sur ECN et les messages ICMP) et permet à la source de différencier les pertes dues à une congestion de celles liées aux erreurs de transmissions. Ces approches de bout en bout ne permettent pas d'opérer un contrôle de flux saut par saut. Par ailleurs, les approches de couche 4 (et plus) ne permettent pas d'être transparent vis-à-vis du protocole de transport utilisé par l'application (par exemple TCP, UDP).

### Couche 4.

De nouveaux protocoles de transport saut par saut ont été définis pour les réseaux radios ad hoc tels que Hop (Block-switched Networks: A New Paradigm for Wireless Transport. Ming Li, Devesh Agrawal, Deepak Ganesan, and Arun Venkataramani in Proceedings of the 6th ACM/USENIX Symposium on Networked Systems Design and Implementation (NSDI 2009), Boston, Apr 2009. http://hop.cs.umass.edu/). Ce protocole définit un contrôle de flux sur chaque saut et une boucle de bout en bout pour assurer la fiabilisation. Les applications doivent utiliser un socket spécifique « hop » pour pouvoir communiquer avec ce protocole. Il ne s'agit pas d'une approche transparente. Une approche similaire appelée « Hop-by-hop TCP » (Hop-by-Hop TCP over MANET. Yao-Nan Lien, Yi-Fan Yu. IEEE APSCC 2008) modifie TCP pour le découper en deux mécanismes. Une partie de bout en bout qui s'occupe principalement du contrôle de congestion et une partie sur chaque saut qui fiabilise les sauts radios. Le procédé décrit dans ce document se différencie de Hop par les points suivants.

Hop gère la fiabilisation totale par bloc (de n'importe quelle taille). Le but étant de fiabiliser la transmission des blocs saut par saut puis de bout en bout car Hop vise une fiabilité totale. L'abstraction par bloc est utilisée pour diminuer la surcharge réseau liée aux acquittements.

Hop fonctionne en mode connecté. Les noeuds doivent ouvrir et maintenir des connections sur chaque saut de proche en proche jusqu'à la destination. Un mécanisme de keep-alive est mis en place pour s'assurer que les blocs sont toujours en cours de transmission sur les noeuds en aval. Si un acquittement venant de la destination finale n'est pas reçu avant un certain temps, les noeuds intermédiaires peuvent réémettre le bloc.

Hop contrôle le débit des blocs avec une solution stop-and-wait. Un bloc n'est envoyé au noeud suivant que si le précédent bloc a été acquitté.

Hop est un protocole de transport, l'application doit donc être modifiée pour pouvoir l'utiliser.

### Couche 3.

Certaines solutions de tunnels IP utilisent un protocole de transport sous-jacent (fournissant un service de fiabilité, livraison ordonnée et de contrôle de flux). C'est le cas des tunnels vTun, SSH et de certains VPN qui repose sur une connexion TCP. Cette solution est utilisée dans un réseau comme Internet, la connexion TCP n'étant pas optimisée pour traverser un réseau contraint.

### Couche 2.

Les solutions type ARQ (Automatic Repeat ReQuest) permettent de rattraper des pertes sur un saut en essayant plusieurs transmissions successives à des intervalles de temps croissants. Ces solutions ne permettent pas de gérer globalement le débit d'un flux et engendrent des variations du délai aller/retour (RTT pour Round-Trip Time en anglais) qui pénalisent les protocoles de transport comme TCP.

Le contrôle de flux que nous cherchons à réaliser pourrait se baser sur :
En résumé, l'état de la technique se décompose en 3 catégories :
   - Les solutions qui proposent un nouveau protocole de transport et qui donc nécessitent un changement au niveau de la source et la destination (Hop).
   - Les solutions qui cassent le contrôle de flux de bout en bout de TCP (PEP, split TCP et autres variantes)
   - Les adaptations de TCP qui restent de bout en bout et nécessitent une transmission depuis la source même si la perte se situe tout près de la destination.

Ainsi, on comprend que les solutions élaborées jusqu'alors ne permettent pas de bénéficier du service IP sur un réseau ad hoc multisauts et notamment un réseau radio, en offrant un service IP transparent avec une optimisation du transport d'un flux de paquets quel que soit le protocole de transport utilisé (TCP, UDP, SCTP...) et permettant notamment de fonctionner dans un environnement chiffré IP-Sec.

L'invention a pour but d'apporter une solution à ce problème.

A cet effet, l'invention a pour objet un procédé de transmission d'informations selon la revendication 1

Suivant des modes particuliers de mise en oeuvre, le procédé comporte l'une ou plusieurs des caractéristiques suivantes :
- la loi de retransmission pour un noeud émetteur donné tient compte pour les règles de non retransmission, de variables liées aux noeuds des sauts précédents entre le noeud émetteur source et le noeud émetteur ;
- la loi de retransmission pour un noeud émetteur donné tient compte, pour les règles de non retransmission, du nombre de noeuds déjà parcourus par sauts successifs depuis le noeud émetteur source ;
- ledit procédé comporte une étape de marquage du type des informations contenues dans le message et la loi de retransmission tient compte, pour les règles de non retransmission, du type des informations contenues dans le message ;
- l'envoi d'un message d'acquittement a lieu seulement lors de la réception conforme d'un ensemble de plusieurs messages ;
- le mécanisme de gestion des congestions met en oeuvre, pour le calcul du débit du noeud émetteur, une loi d'augmentation additive et de diminution multiplicative (AIMD pour additive Increase Multiple Decrease en anglais) ;
- le mécanisme de gestion de congestion met en oeuvre une non transmission définitive de certains messages du noeud émetteur vers le noeud récepteur en cas de congestion du noeuds récepteur ;
- la non transmission des messages est appliquée aux messages ayant parcouru le moins de sauts jusqu'au noeud émetteur et/ou aux messages ayant la probabilité la plus faible d'arriver au noeud de récepteur final ;
- les informations contenues dans les messages transmis sont des informations formatées pour une transmission sur un réseau selon le Protocole IP et les messages transmis comportent, en plus des informations aux formats IP, un entête (HBH) propre à assurer les mécanismes de gestion de la fiabilité et de gestion des congestions ; et
- l'entête comporte une information représentative du protocole transporté.

L'invention sera mieux comprise à la lecture de la description qui va suivre, donnée uniquement à titre d'exemple et faite en se référant aux dessins sur lesquels :
- la figure 1 est une vue schématique d'un réseau dans lequel le procédé selon l'invention est mise en oeuvre ;
- la figure 2 est une vue schématique illustrant le flux des informations de noeud en noeud dans le réseau ;
- la figure 3 est une vue schématique de l'entête d'un message utilisé dans le protocole selon l'invention ; et
- la figure 4 est une vue schématique de l'architecture fonctionnelle d'un noeud du réseau.

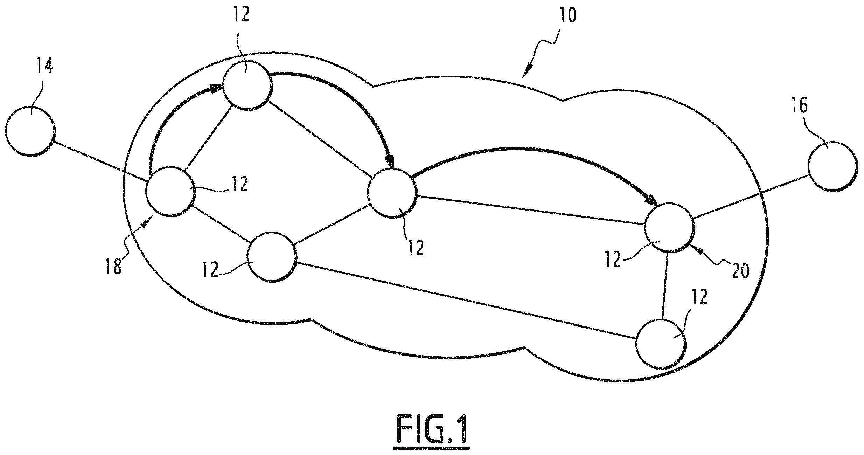

Sur la figure 1 est représenté un réseau ad hoc 10 ou MANET dont les noeuds 12, représentés par des cercles, sont formés par exemple par des radios mobiles portées par des véhicules militaires.

Le réseau 10 permet la communication entre les noeuds par sauts successifs de noeud en noeud, mais il permet également la communication depuis et vers des noeuds extérieurs au réseau tels que les noeuds 14 et 16.

Ainsi, les noeuds du réseau 10, en relation avec des noeuds extérieurs au réseau 10 comme les noeuds 14 et 16 assurent une fonction de passerelle. Tel est le cas des noeuds 18 et 20 sur la figure 1. Les autres noeuds 12 du réseau 10, assurent seulement la transmission et la réception d'informations depuis et vers d'autres noeuds du réseau. Ils constituent alors seulement des noeuds relais.

Un noeud passerelle 18, 20 héberge par exemple une application locale ou est connecté à un autre réseau IP, par exemple un réseau LAN ou WAN qui forme alors chacun un noeud extérieur tel que les noeuds 14 et 16.

Comme connu en soi, le réseau ad hoc 10 assure la transmission de messages à partir de l'adresse IP du noeud destinataire par sauts successifs dans le réseau 12. Ainsi, un message adressé par le noeud d'origine 14 vers le noeud destinataire 16 transite d'abord par le noeud passerelle 18 puis par deux noeuds relais 12 du réseau avant de parvenir au noeud passerelle 20 et d'être transmis enfin au noeud destinataire 16.

Le procédé selon l'invention découple le traitement de la fiabilisation et celui de la congestion avec des paramètres différents :
- Il traite la fiabilisation sur chaque saut avec une fenêtre W de messages et un paramètre d'effort de fiabilisation p. La fenêtre W permet de réduire la surcharge liée aux acquittements et gère l'envoi simultané de transmissions ou de retransmissions. Les données peuvent être perdues après un certain effort de fiabilisation p qui peut par exemple être un temps ou un nombre maximum de retransmissions. Ainsi, le paramètre p définit une règle de non retransmission d'un paquet, puisque, lorsque l'effort de retransmission est supérieur à un effort maximum prédéfini, la retransmission n'a pas lieu.
- Il traite la congestion avec un mécanisme de contre-pression (« back pressure » en anglais) saut par saut qui régule le débit maximum de sortie λ d'un noeud en fonction de la congestion du noeud suivant.

### Mise en oeuvre dans un contexte IP

Ce procédé est implémenté dans une radio ad hoc comme un service optimisé de transport de paquets IP. Dans ce cas, aucune adaptation de l'application n'est nécessaire. Le protocole assure la régulation du débit de données pour éviter la congestion du réseau. Il fournit une fiabilisation saut par saut réglable en fonction du protocole et des applications utilisées au dessus.

Le besoin d'une fiabilité paramétrable, et non totale, provient du fait que la plupart des protocoles réseaux ou applicatifs au dessus d'IP mettent eux-mêmes en oeuvre des mécanismes d'acquittements. Essayer d'atteindre une fiabilité totale au niveau IP pourrait aggraver une congestion et interférer fortement avec les protocoles au dessus. A l'opposé, fournir un service non-fiabilisé n'est pas efficace dans un environnement radio comme décrit ci-dessus. Un compromis doit donc être trouvé.

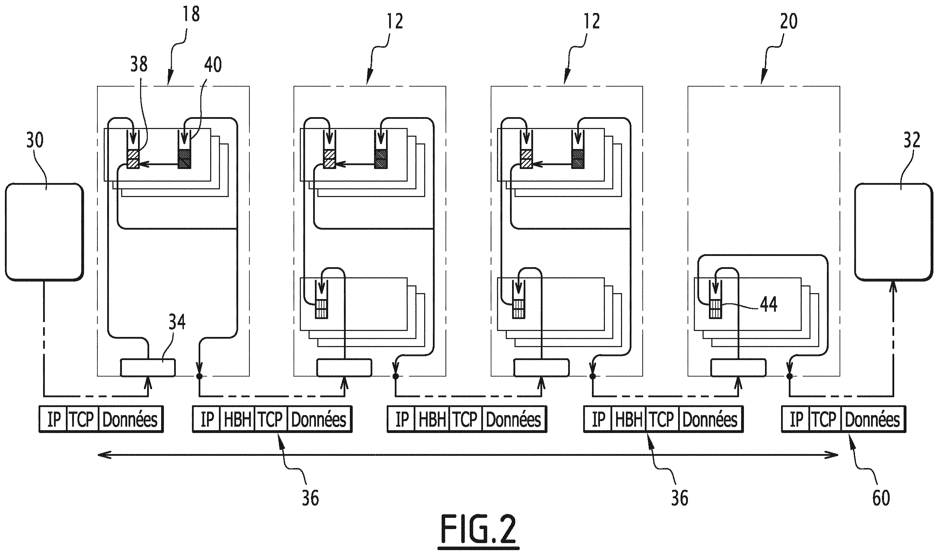

La figure 2 montre plus en détails les opérations qui sont réalisées sur les paquets IP. Les paquets IP sont interceptés sur le premier noeud passerelle 18 pour être pris en charge par le procédé. Ils sont restitués tels quels sur le dernier noeud passerelle 20. Dans le cadre de sa mise en oeuvre pour IP, le procédé offre une surcouche de fiabilisation et de contrôle de congestion sans pour autant être au niveau transport au sens OSI (niveau 4). On le définit comme étant du niveau 3.5 selon le modèle OSI car il ajoute un entête dite HBH (Hop-By-Hop) entre l'entête IP et l'entête du transport (TCP ou UDP par exemple). Le procédé peut être implémenté à différents niveaux du modèle OSI mais, pour simplifier la présentation, dans l'exemple considéré l'implémentation est faite au niveau 3.5.

Les noeuds sont propres à adresser des messages vers d'autres noeuds en fonction de l'adresse IP du noeud destinataire et des règles de routage propres au réseau IP. A chaque réception d'un ou plusieurs messages et avantageusement après la réception d'un ensemble de messages sur la fenêtre W, le noeud récepteur retourne, comme connu en soi, un message d'acquittement vers le noeud émetteur.

La figure 2 illustre également les processus et les files d'attentes nécessaires au fonctionnement du procédé. Nous détaillons leur utilisation dans la suite du document.

On retrouve sur la figure 2 les noeuds passerelles 18, 20 ainsi que les noeuds intermédiaires 12 du réseau ad hoc. Le noeud 18 reçoit des informations d'une application IP notée 30 ou d'un noeud d'un réseau IP. De même, le noeud relais 20 transmet les informations à une application IP ou un noeud d'un réseau IP noté 32.

Le message reçu de l'application 30 présente un format connu en soi, avec en entête l'adresse IP de destination, suivi de l'indication du protocole de transport utilisé, par exemple TCP, suivi de la charge utile, c'est-à-dire les données propres au message.

En entrée du noeud 18 agissant en noeud passerelle, lors d'une étape notée 34, le message est modifié pour ajouter l'entête HBH, entre l'entête IP et celle du protocole de transport utilisé pour former une trame telle que désignée par la référence 36 sur la figure 2.

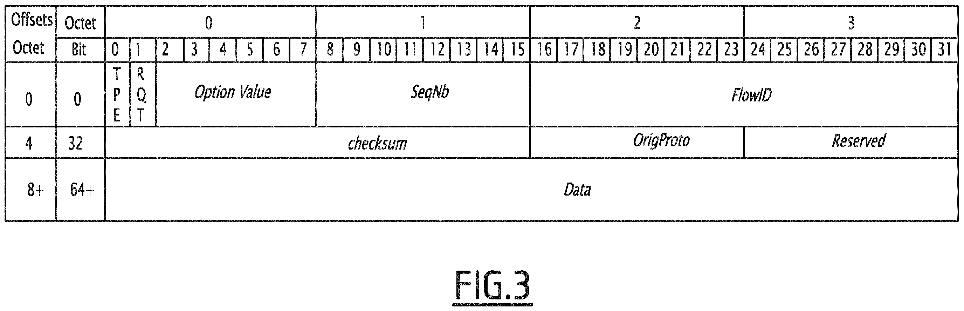

Le détail de l'entête ajouté est illustré sur la figure 3.

Les informations dans l'entête du protocole sont les suivantes :
∘ TPE: représente le TyPE d'un paquet à savoir données ou acquittement (DATA ou ACK).
∘ RQT: ce drapeau indique une ReQuêTe spéciale. Une demande explicite d'acquittement pour un paquet DATA, ou l'indication d'une congestion pour un ACK.
∘ OptionValue: représente la taille de l'option SACK pour les paquets ACK. Pour les paquets de données DATA, il peut être utilisé pour indiquer au récepteur de vider la file ooList (en cas de perte définitive d'un paquet par l'émetteur par exemple) et pour ajouter des informations de FEC par exemple.
∘ SeqNb: contient le numéro de séquence pour les paquets DATA et le numéro de séquence du paquet acquitté pour les paquets ACK.
∘ FlowlD: contient la valeur unique qui identifie le flux. Cette valeur est calculée à chaque saut lorsqu'un nouveau flux est enregistré.
∘ Checksum: contient le checksum du paquet.
∘ OrigProto: Indique le numéro du protocole transporté (TCP ou UDP par exemple)

Le message IP ainsi complété est placé dans une file d'attente de sortie 38 notée dans la suite par outputQ.

En fonction du débit de sortie λ, propre au noeud 18, les messages présents dans la file d'attente sont transférés vers le noeud suivant 12. Le routage vers le noeud 18 est effectué comme connu en soi à partir de l'adresse IP présente dans le message 36.

Simultanément, le message transmis vers le noeud 12 est également transmis au sein du noeud 18 vers une autre file d'attente 40 désignée dans la suite par nACKedQ. Cette file d'attente comporte les messages pour lesquels l'acquittement n'a pas été reçu et qui n'ont pas été encore détruits.

Les messages 26 non acquittés devant être retransmis sont transmis de la file 40 vers la file 38 en fonction de règles prédéterminées pour permettre leur retransmission au débit de sortie λ suivant l'ordre de la file 38.

Les mêmes étapes sont mises en oeuvre dans les noeuds intermédiaires 12. A chaque entrée dans un noeud intermédiaire, l'entête HBH est modifiée pour préciser notamment le nombre de noeuds par lequel le message a transité, ou encore la probabilité que le message n'arrive pas, calculée en fonction du nombre de sauts ou du temps d'expiration restant.

A l'arrivée dans le noeud passerelle de sortie 20, la trame du message ayant la forme 36, et comportant l'entête HBH après l'entête IP et avant celle du protocole de transport est modifiée pour supprimer l'entête HBH et mise dans une file de sortie temporaire 44 avant d'être adressée à l'application IP 32. Le message a alors le format d'un message IP classique désigné schématiquement par la référence 60 sur la figure 2.

Ainsi, pour les applications 30 et 32, la modification du message opérée dans le réseau ad hoc pour permettre la mise en oeuvre du procédé est transparente.

Le procédé prévoit un mécanisme de fiabilisation et un mécanisme de gestion des congestions assurant la gestion de la transmission et de la retransmission des messages dans le réseau 10.

Ces mécanismes sont mis en oeuvre dans chacun des noeuds comme exposé ci-dessous.

### Mécanisme de fiabilisation

Le mécanisme de fiabilisation s'effectue seulement saut par saut et non de bout en bout. Il utilise la fenêtre glissante W pour gérer l'envoi des paquets. La taille de la fenêtre W définit le nombre maximum de paquets (transmissions ou retransmissions) en attente d'acquittement. La fenêtre W est mise à jour à chaque RTT (Round Trip Time) en utilisant par exemple un mécanisme d'augmentation additif et de décroissance multiplicatif connu sous l'acronyme AIMD pour Additive Increase Multiple Decrease en anglais. W a une valeur minimale et une valeur maximale. W est réduit lorsqu'une perte est détectée (expiration du RTO (Retransmission Time Out) pour un paquet dans la file nACKedQ). Diminuer W en cas de perte permet d'être plus réactif pour détecter la disparition d'un noeud voisin par exemple. La taille de la fenêtre W influence le débit mais n'est pas utilisée dans cet objectif ici. Les valeurs minimales et maximales de W sont de préférence assez proches et pas trop grandes notamment entre 5 et 10 paquets par exemple.

Les paquets sont envoyés avec un numéro de séquence SeqNb figurant dans l'entête pour que le noeud récepteur puisse identifier les pertes et réordonner les paquets si nécessaire. Le noeud récepteur utilise un mécanisme d'acquittement cumulatif et sélectif qui indique au récepteur les paquets qui ont été reçus. L'envoi des acquittements est déclenché par le noeud émetteur qui positionne le drapeau RQT à 1 dans les paquets de données ou sur la détection d'une perte grâce aux numéros de séquence.

Le noeud émetteur a besoin d'estimer le RTT pour pouvoir mettre à jour W et définir le RTO (Retransmission Time Out). A la réception de l'acquittement du message M, le procédé estime le RTT, sa variance et le RTO avec une moyenne glissante.

L'effort de fiabilisation p associé à un flux est un paramètre global pouvant être défini par le noeud passerelle en fonction des caractéristiques du flux (protocole de transport, classe de service, besoins applicatifs particuliers). Il peut par exemple être calculé à partir du :
- Nombre maximal de retransmissions à chaque saut
- Nombre maximal de retransmissions total sur la route
- Temps d'expiration (estimé) du paquet dans la couche transport

La fiabilité du procédé est avantageusement améliorée par la mise en oeuvre d'un code FEC (Forward Error Correction) pour augmenter l'utilité de chaque transmission. Le taux de redondance varie linéairement par rapport à la taille de la fenêtre W. Lorsque W diminue, la redondance augmente pour plus de fiabilisation.

### Marquage des paquets

L'effort de fiabilisation p est avantageusement défini de manière différente en fonction des caractéristiques du flux transporté. Un flux temps réel demande une légère fiabilisation, voire pas de fiabilisation, contrairement à un transfert de données non critiques d'un point de vue temporel.

Par ailleurs, cet effort p varie avantageusement au cours du temps. Dans le cas d'un transfert TCP par exemple, p doit être élevé pour éviter de retransmettre les paquets perdus depuis la source mais doit être suffisamment faible pour éviter une retransmission locale d'un paquet qui serait déjà en train d'être retransmis de bout en bout par la source.

L'effort de fiabilisation p est avantageusement appliqué de manière graduelle le long d'une route. A cet effet, l'effort de fiabilisation peut être augmenté à chaque saut car il est plus grave de perdre un paquet ayant déjà parcouru une partie substantielle du chemin vers la destination qu'un paquet venant de partir.

Le paramètre ρ peut être associé au flux sur le noeud passerelle ou en amont par un chiffeur IPSec ou un PEP TCP. Il peut par exemple être véhiculé le long de la route dans le header du procédé ou dans une option IP.

### Mécanisme de gestion des congestions

Le mécanisme de gestion des congestions est effectué seulement saut par saut et non de bout en bout.

Les congestions sont détectées en utilisant un seuil s1 que l'on compare au nombre de paquets dans la file outputQ plus ceux de la file nACKedQ. Sur dépassement de ce seuil, un signal est envoyé au noeud émetteur précédent pour qu'il réduise son débit. Sur chaque noeud, le débit en émission de chaque flux est contrôlé par un paramètre λ.

λ est initialisé avec une valeur infinie, le procédé démarre dans un mode « non congestionné ». Lors de la réception d'un signal de congestion, λ est alors initialisé au débit courant du flux. Un mode « congestion avoidance » est alors activé. Dans ce mode, λ évolue en suivant par exemple un mécanisme d'AIMD (Additive Increase Multiple Decrease), il augmente par addition d'une constante à chaque RTT et il est multiplié par une autre constante lorsqu'un signal de congestion est reçu.

Une fois le mode « congestion avoidance » actif, le noeud peut :
- Y rester définitivement
- Repasser en mode congestionné en fonction de l'état de ses files d'attente.

Le débit d'un noeud émetteur dépend donc de l'état de congestion du seul noeud récepteur suivant.

En cas de forte congestion, un mécanisme de perte de paquets dans les files outputQ et nACKedQ est avantageusement présent. Les paquets ayant parcouru le moins de chemin ou ayant le moins de chance d'arriver à temps à destination pourraient être jetés. Des variables représentatives du chemin parcouru ou de la chance d'arriver à temps à destination sont ajoutées dans l'entête HBH présentée dans ce document ou sont fournies par un autre module du système (ex : nombre de sauts pour le module de routage).

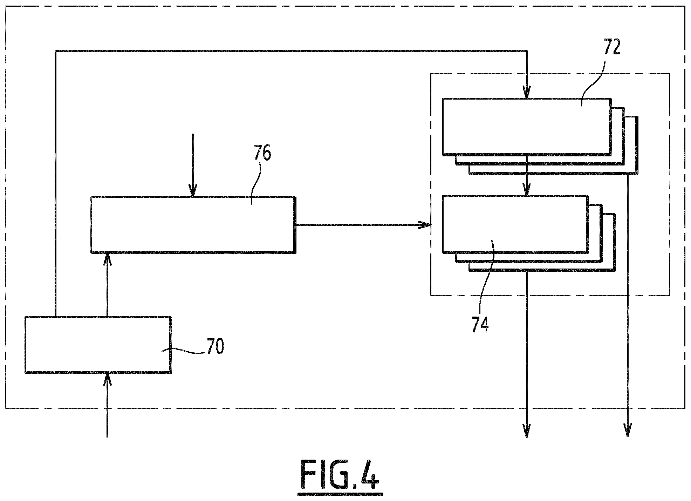

Pour chaque noeud et comme illustré sur la figure 4, l'architecture du noeud comporte un module d'interception des paquets 70 alimentant un module de réception 72 et un module d'envoi 74. Les différentes files sont gérées par un module 76 de gestion des flux.

Les fonctions des différents modules sont détaillées dans la suite.

Le module d'interception 70 intercepte les paquets IP entrants dans le réseau MANET 10 et enregistre les flux non connus auprès du module de gestion des flux 76. Les flux sont identifiés par exemple avec le n-uplet IP source / destination et des informations complémentaires (ports source / destination si accessibles, champ SPI en cas de chiffrement par IP-Sec). Les paquets appartenant à des flux connus sont transférés au module de réception 72.

Le module 76 de gestion des flux maintient la liste des flux actifs. Pour chaque nouveau flux, ce module instancie un traitement qui sera en charge de le traiter. Ce traitement est composé des modules de réception de flux 72 et d'envoi 74. Le module peut effectuer les opérations suivantes :
∘ création des modules de réception de flux 72 et d'envoi 74.
∘ mise à jour des modules « flow reception » et « flow dispatch ». (e.g., ajuster un paramètre comme le seuil s1 décrit plus tard).
∘ terminaison (e.g., après un temps d'inactivité)

Les opérations de mise à jour ou de terminaison sont avantageusement déclenchées en fonction d'états du système extérieurs au procédé. Par exemple, si le système sait que de nouvelles ressources radios vont être allouées vers un destinataire, le module de gestion des flux 76 augmente le débit autorisé λ (cf. description module « flow dispatch » et du mécanisme de back pressure). Ce serait le cas dans un réseau de radio cognitive qui réutilise des fréquences disponibles de manière opportuniste ou planifiée.

Le module de réception de flux 72 reçoit les paquets du noeud émetteur précédent dans la file d'attente ooList notée 34 sur la figure 2. Il se charge de les acquitter et de vérifier que leur numéro de séquence n'est pas aberrent (la différence entre les numéros de séquence des paquets de la file ne doit pas être supérieure à un seuil MaxReord par exemple).

Le module d'envoi de flux 74 met en oeuvre le protocole de transport saut-par-saut. Il contient les deux files d'attente outputQ (paquets en attente de transmission) et nACKedQ (paquets en attente d'être acquittés) notées 38, 40 sur la figure 2. Les paquets IP étant arrivés au dernier noeud du réseau MANET, sont alors émis sur le réseau local ou vers l'application. Pour les autres paquets en transit, les paquets de outputQ 38 sont envoyés vers le prochain noeud à la vitesse λ puis sont placés dans la file nACKedQ 40 en attendant d'être acquittés.

Lors de la réception de l'acquittement, les paquets sont supprimés de la file nACKedQ 40. Le mécanisme de fenêtre glissante avec acquittements sélectifs est utilisé pour réduire le poids des acquittements (voir section « fiabilité » ci-dessous). Après être restés au delà de RTO (Retransmission Time Out) secondes, les paquets sont placés à nouveau et en priorité dans la file outputQ pour être retransmis. P retransmissions sont autorisées au maximum. Les congestions dans la file outputQ sont détectées en utilisant un seuil s1. Sur dépassement de ce seuil, un signal est envoyé au noeud précédent pour qu'il réduise son débit (selon le mécanisme de « back pressure » déjà exposé).

Les files d'attente ooList, outputQ et nACKedQ ont une taille finie. Les nouveaux paquets sont perdus lorsque les files sont pleines. Un mécanisme de pertes aléatoires (type RED - Random Early Détection) est avantageusement mis en oeuvre.

### Gestion de la mobilité

Lorsqu'un noeud intermédiaire n'est plus sur la route pour un flux donné, les paquets qu'il a acquitté mais qu'il n'a pas encore envoyés peuvent être perdus si aucune route n'existe pour la destination.

Le nouveau noeud intermédiaire enregistre le flux comme un nouveau flux.

Le procédé selon l'invention procure les avantages suivants :
Transporte des paquets IP de bout en bout de manière efficace
   - Fournit une solution agnostique du protocole de transport (e.g. UDP, TCP)
   - Est Compatible IPSec
   - Utilise mieux les ressources (contrôle de flux local et protocole de transport adéquat à chaque saut)
   - Régule le débit du trafic de bout en bout par « back pressure »
   - Fiabilise la transmission de bout en bout avec un mécanisme d'acquittement saut par saut paramétrable
   - Repose sur le routage IP habituel
   - Traite les flux IP de manière unidirectionnelle.
   - Fonctionne en mode non-connecté ou « soft state ». Au bout d'un certain temps, si aucun paquet n'est traité, le contexte mémoire lié au flux est détruit.Transporte un flux de données en évitant les congestions sur les noeuds intermédiaires et en fiabilisant partiellement les transmissions sur chaque saut. L'objectif du mécanisme est de prévenir les congestions et repousser les pertes vers le premier noeud en cas de congestion, et d'assurer une fiabilité paramétrable en évitant les retransmissions de bout-en-bout depuis la source.

## Revendications

1. Procédé de transmission d'informations dans un réseau ad hoc multisauts comportant, la transmission d'un message d'un noeud émetteur source à un noeud destinataire final au travers d'une succession de sauts d'un noeud émetteur à un noeud récepteur immédiatement suivant, dans lequel est mis en oeuvre :
a) un mécanisme de la gestion de la fiabilité comportant :
- lors de la ou chaque réception conforme sur chaque saut, d'au moins un message par le noeud récepteur, l'envoi d'un message d'acquittement vers le seul noeud émetteur,
- l'application d'une loi de retransmission du message sur le saut, du noeud émetteur vers le noeud récepteur, laquelle loi comporte des règles de non retransmission de messages, conduisant à la non retransmission du message,
b) un mécanisme de gestion des congestions des noeuds prévoyant une limitation du débit d'envoi d'un noeud émetteur vers un noeud récepteur suite à une information de congestion du noeud récepteur adressée au noeud émetteur, **caractérisé en ce que** le mécanisme de gestion des congestions est appliqué seulement saut par saut, l'information de congestion n'étant transmise que d'un noeud récepteur à un noeud émetteur sur un même saut pour la limitation du débit du seul noeud émetteur vers le seul noeud récepteur.

2. Procédé selon la revendication 1, **caractérisé en ce que** la loi de retransmission pour un noeud émetteur donné tient compte pour les règles de non retransmission, de variables liées aux noeuds des sauts précédents entre le noeud émetteur source et le noeud émetteur.

3. Procédé selon la revendication 2, **caractérisé en ce que** la loi de retransmission pour un noeud émetteur donné tient compte, pour les règles de non retransmission, du nombre de noeuds déjà parcourus par sauts successifs depuis le noeud émetteur source.

4. Procédé selon l'une quelconque des revendications précédentes, **caractérisé en ce qu'**il comporte une étape de marquage du type des informations contenues dans le message et **en ce que** la loi de retransmission tient compte, pour les règles de non retransmission, du type des informations contenues dans le message.

5. Procédé selon l'une quelconque des revendications précédentes, **caractérisé en ce que** l'envoi d'un message d'acquittement a lieu seulement lors de la réception conforme d'un ensemble de plusieurs messages.

6. Procédé selon l'une quelconque des revendications précédentes, **caractérisé en ce que** le mécanisme de gestion des congestions met en oeuvre, pour le calcul du débit du noeud émetteur, une loi d'augmentation additive et de diminution multiplicative.

7. Procédé selon l'une quelconque des revendications précédentes, **caractérisé en ce que** le mécanisme de gestion de congestion met en oeuvre une non transmission définitive de certains messages du noeud émetteur vers le noeud récepteur en cas de congestion du noeud récepteur.

8. Procédé selon la revendication 7, **caractérisé en ce que** la non transmission des messages est appliquée aux messages ayant parcouru le moins de sauts jusqu'au noeud émetteur et/ou aux messages ayant la probabilité la plus faible d'arriver au noeud de récepteur final.

9. Procédé selon l'une quelconque des revendications précédentes, dans lequel les informations contenues dans les messages transmis sont des informations formatées pour une transmission sur un réseau selon le Protocole IP et en ce que les messages transmis comportent, en plus des informations aux formats IP, un entête propre à assurer les mécanismes de gestion de la fiabilité et de gestion des congestions.

10. Procédé selon la revendication 9, **caractérisé en ce que** l'entête comporte une information représentative du protocole transporté.

## Patentansprüche

1. Verfahren zur Übertragung von Informationen in einem Ad hoc-Mehrsprung-Netz, umfassend die Übertragung einer Nachricht von einem Ursprungssenderknoten zu einem Endbestimmungsknoten über eine Abfolge von Sprüngen von einem Senderknoten zu einem unmittelbar darauffolgenden Empfängerknoten, wobei Folgendes eingesetzt wird:
a) ein Zuverlässigkeitsmanagementmechanismus, umfassend:
- bei dem oder jedem konformen Empfang bei jedem Sprung mindestens einer Nachricht durch den Empfängerknoten, das Versenden einer Quittierungsnachricht zum einzigen Senderknoten,
- das Anwenden eines Gesetzes zur Wiederübertragung der Nachricht bei dem Sprung, vom Senderknoten zum Empfängerknoten, wobei das Gesetz Regeln zur Nicht-Wiederübertragung von Nachrichten umfasst, die zur Nicht-Wiederübertragung der Nachricht führen,
b) ein Managementmechanismus für Überlastungen der Knoten, der eine Einschränkung des Sendedurchsatzes von einem Senderknoten zu einem Empfängerknoten infolge einer an den Senderknoten gerichteten Überlastungsinformation des Empfängerknotens vorsieht,
**dadurch gekennzeichnet, dass** der Managementmechanismus für Überlastungen nur Sprung für Sprung angewendet wird, wobei die Überlastungsinformation zur Einschränkung des Durchsatzes des einzigen Senderknotens zum einzigen Empfängerknoten nur von einem Empfängerknoten zu einem Senderknoten über denselben Sprung übertragen wird.

2. Verfahren nach Anspruch 1, **dadurch gekennzeichnet, dass** das Wiederübertragungsgesetz für einen bestimmten Senderknoten für die Nicht-Wiederübertragungsregeln Variablen berücksichtigt, die mit den Knoten der vorhergehenden Sprünge zwischen dem Ursprungssenderknoten und dem Senderknoten verbunden sind.

3. Verfahren nach Anspruch 2, **dadurch gekennzeichnet, dass** das Wiederübertragungsgesetz für einen bestimmten Senderknoten für die Nicht-Wiederübertragungsregeln die Anzahl von Knoten berücksichtigt, die bereits durch sukzessive Sprünge vom Ursprungssenderknoten her durchlaufen wurden.

4. Verfahren nach einem der vorhergehenden Ansprüche, **dadurch gekennzeichnet, dass** es einen Schritt zur Markierung des Typs der in der Nachricht enthaltenen Informationen umfasst, und dass das Wiederübertragungsgesetz für die Nicht-Wiederübertragungsregeln den Typ der in der Nachricht enthaltenen Informationen berücksichtigt.

5. Verfahren nach einem der vorhergehenden Ansprüche, **dadurch gekennzeichnet, dass** das Versenden einer Quittierungsnachricht nur beim konformen Empfang einer Einheit von mehreren Nachrichten stattfindet.

6. Verfahren nach einem der vorhergehenden Ansprüche, **dadurch gekennzeichnet, dass** der Managementmechanismus für Überlastungen für die Berechnung des Durchsatzes des Senderknotens ein Gesetz additiver Zunahme und multiplikativer Abnahme einsetzt.

7. Verfahren nach einem der vorhergehenden Ansprüche, **dadurch gekennzeichnet, dass** der Managementmechanismus für Überlastungen im Falle einer Überlastung des Empfängerknotens eine definitive Nichtübertragung bestimmter Nachrichten vom Senderknoten zum Empfängerknoten einsetzt.

8. Verfahren nach Anspruch 7, **dadurch gekennzeichnet, dass** die Nichtübertragung von Nachrichten auf Nachrichten, die am wenigsten Sprünge bis zum Senderknoten durchlaufen haben, und/oder auf Nachrichten angewendet wird, welche die geringste Wahrscheinlichkeit haben, beim Endempfängerknoten anzukommen.

9. Verfahren nach einem der vorhergehenden Ansprüche, bei dem die in den übertragenen Nachrichten enthaltenen Informationen für eine Übertragung über ein Netz nach dem IP-Protokoll formatierte Informationen sind, und dass die übertragenen Nachrichten, zusätzlich zu den Informationen in IP-Formaten, einen Kopfblock umfassen, der sich dazu eignet, die Zuverlässigkeitsmanagementmechanismen und zum Management der Überlastungen sicherzustellen.

10. Verfahren nach Anspruch 9, **dadurch gekennzeichnet, dass** der Kopfblock eine für das transportierte Protokoll repräsentative Information umfasst.

## Claims

1. A method for transmitting information in an ad hoc multi-hop network including the transmission of a message from a source transmitting node to a final receiving node through a series of hops from a transmitter node to an immediately following receiver node, using:
a) a reliability management mechanism including:
- upon the or each compliant receipt on each hop of at least one message by the receiving node, the sending of an acknowledgment message to the sole transmitting node,
- applying a retransmission law of the message on the hop, from the transmitting node to the receiving node, said law including message non-retransmission rules leading to the non-retransmission of the message,
b) a mechanism for managing congestion of the nodes providing for a limitation of the throughput for sending from a transmitting node to a receiving node following congestion information from the receiving node sent to the transmitting node.
**characterized in that** the congestion management mechanism is applied only hop-by-hop, the congestion information only being transmitted from a receiving node to a transmitting node over a same hop to limit the throughput of only the transmitting node toward only the receiving node.

2. The method according to claim 1, **characterized in that** the retransmission law for a given transmitting node accounts, for the non-retransmission rules, for variables related to the nodes of the preceding hops between the source transmitting node and the transmitting node.

3. The method according to claim 2, **characterized in that** the retransmission law for a given transmitting node accounts, for the non-retransmission rules, for the number of nodes already traveled by successive hops from the source transmitting node.

4. The method according to any one of the preceding claims, **characterized in that** it includes a step for marking the type of information contained in the message and the retransmission law accounts, for the non-retransmission rules, for the type of information contained in the message.

5. The method according to any one of the preceding claims, **characterized in that** an acknowledgment message is sent only upon compliant receipt of a set of several messages.

6. The method according to any one of the preceding claims, **characterized in that** the congestion management mechanism uses an additive increase multiple decrease law to calculate the throughput of the transmitted node.

7. The method according to any one of the preceding claims, **characterized in that** the congestion management module uses a definitive non-transmission of certain messages from the transmitting node to the receiving node in case of congestion of the receiving node.

8. The method according to claim 7, **characterized in that** the non-transmission of messages is applied to messages having traveled through the fewest hops to the transmitting node and/or messages having the lowest probability of reaching the final receiving node.

9. The method according to any one of the preceding claims, **characterized in that** the information contained in the transmitted messages is information formatted for transmission on a network according to the IP Protocol and the transmitted messages include, in addition to information in the IP formats, a header capable of providing the reliability management and congestion management mechanisms.

10. The method according to claim 9, **characterized in that** the header includes information representative of the transported protocol.
